# EUROPÄISCHE PATENTSCHRIFT

(11) **EP 2 150 327 B1**
(45) Veröffentlichungstag und Bekanntmachung des Hinweises auf die Patenterteilung: **28.09.2011**
(21) Anmeldenummer: 08748854.0
(22) Anmeldetag: 01.04.2008
(51) Int. Cl.: B01D 53/94, B01J 23/46, B01J 35/00

(54) **ABGASNACHBEHANDLUNG MIT VERRINGERTER RHODIUMBELADUNG**
EXHAUST GAS AFTER-TREATMENT HAVING REDUCED RHODIUM DEPLETION
POST-TRAITEMENT DE GAZ D'ÉCHAPPEMENT AVEC UNE CHARGE RÉDUITE DE RHODIUM

(30) Priorität: 20.04.2007 DE 102007019197
(43) Veröffentlichungstag der Anmeldung: 10.02.2010
(73) Patentinhaber: Volkswagen Aktiengesellschaft, 38436 Wolfsburg (DE)
(72) Erfinder: THEOBALD, Jörg, 38165 Lehre (DE); DEGEN, Alf, 38536 Meinersen (DE); POTT, Ekkehard, 38518 Gifhorn (DE)
(74) Vertreter: Pohlmann, Bernd Michael
(86) Internationale Anmeldenummer: PCT/EP2008/002588
(87) Internationale Veröffentlichungsnummer: WO 2008/128624

(56) Entgegenhaltungen:
- EP-A- 1 121 979
- WO-A-00/62923
- US-A1- 2003 079 520

## Beschreibung

Die vorliegende Erfindung betrifft Verfahren und Vorrichtungen auf dem Gebiet der Abgasnachbehandlung bei Verbrennungsmotoren für Kraftfahrzeuge.

Bekannt sind bereits Katalysatorsysteme für Verbrennungsmotoren für Kraftfahrzeuge mit denen Schadstoffe in Abgasen der Verbrennungsmotoren in unschädliche oder weniger schädliche Komponenten konvertiert werden können. Derartige Katalysatorsyeteme umfassen üblicherweise einen häufig motomahen Katalysator mit einer katalytisch wirksamen Edelmetallbeladung aus der Platingruppe, insbesondere den Elementen Platin, Palladium und Rhodium. Da Platin eine geringere Temperaturstabilität aufweist, werden Edelmetallbeladungen mit den Elementen Palladium und Rhodium bevorzugt, wobei Rhodium aufgrund seiner reduzierenden Wirkung für die Stickoxyd (NOX) Konvertierung und Palladium aufgrund seiner oxidierenden Wirkung für die Kohlenwasserstoff (HC) und Kohlenmonoxid (CO) Konvertierung eingesetzt wird.

Die Edelmetallbeladung der Katalysatoren stellt einen beträchtlichen Kostenfaktor dar, kann jedoch, wenn die gesetzlichen Abgasnormen für die Verbrennungsmotoren beziehungsweise Kraftfahrzeuge erreicht werden sollen, nicht beliebig vermindert werden. Insbesondere ist zur Erreichung der Europäischen Abgasnorm EU4 gegenwärtig in der Edelmetallbeladung ein Gewichtsverhältnis der Elemente Palladium und Rhodium von 5:1 und eine spezifische Beladung mit Rhodium von 6,66 g/ft³ bezogen auf das Katalysatorvolumen VK erforderlich. Die genannten Werte für die spezifische Beladung mit Rhodium entsprechen einer absoluten Beladung mit Rhodium von 0,0296 g für einen Katalysator mit einem Volumen von 1,258 l und einer absoluten Beladung von 0,0236 g für einen Katalysator mit einem Volumen von 1 l, wobei jeweils eine Zelldichte von 600 cpsi (cells per square inch) und eine Wandstärke der von Abgas durchströmten Kanäle von 4,3 mit (ein mil = 0,0254 mm) angenommen wurde. Ferner ist aus der US 2003/0079520 A1 bereits ein Katalysator mit einem Palladium-Rhodium-Verhältnis von 9:1 bei einer Edelmetallbeladung von 60g/ft³ bekannt. Da der Grammpreis von Rhodium um circa den Faktor 10 größer ist als der Grammpreis von Palladium, versteht es sich, dass eine Verringerung der relativen und absoluten Rhodiumbeladung eines Abgaskatalysators aus Kostengründen sowie für ein nachhaltiges Rohstoffmanagement wünschenswert ist.

Ein wesentlicher Faktor, der einer Reduzierung der Rhodiumbeladung bislang entgegenstand, war dass die katalysatorspezifische Anspring- oder Light-Off-Temperatur nach einem Kaltstart bei reduzierter Rhodiumbeladung des Katalysators zumindest im Neuen Europäischen Fahrzyklus nicht schnell genug erreicht werden konnte, um die gesetzlichen Abgasemissionsgrenzwerte zu erfüllen.

Der vorliegenden Erfindung liegt daher die Aufgabe (Problem) zugrunde, ein Abgas eines Verbrennungsmotors bei reduzierten Kosten und verringertem Rhodiumverbrauch unter Einhaltung niedriger Emissionsgrenzwerte zu reinigen.

Die Aufgabe wird erfindungsgemäß mit den Merkmalen der unabhängigen Patentansprüche gelöst.

Bei dem Verfahren zur Erreichung der Emissionsgrenzwerte der EU-Norm 4, vorzugsweise der EU-Norm 5, in einem System beinhaltend einen Verbrennungsmotor und ein Abgassystem mit Katalysator, ist vorgesehen, dass der Verbrennungsmotor
- ein direkteinspritzender Verbrennungsmotor ist,
- einen Hubraum zwischen 0.89 l und 2 l aufweist,
- von einem einen Verdichter und eine Turbine umfassenden Abgasturbolader aufgeladen wird,
- eine kumulierte Rohemission aufweist, die Innerhalb eines Zeitintervalls von 10 Sekunden an Kohlenwasserstoffen 0,05 g/km und an Stickoxiden 0,04 g/km nicht überschreiten, und
- bei einem Betrieb Im Neuen Europäischen Fahrzyklus nach einem Motorstart
- eine Heizmaßnahme vorgesehen ist, bei der in einem Homogenbetrieb eine Mehrfacheinspritzung von Kraftstoff erfolgt, die mindestens eine erste frühe Kraftstoffeinspritzung während eines Ansaugtaktes und mindestens eine zweite späte Einspritzung in einem Verdichtungstakt eines Zylinders umfasst, so dass innerhalb eines Zeitintervalls von 30 Sekunden der Katalysator eine Temperatur T_{K} von 300°C überschreitet und
wobei der Katalysator
- eine Edelmetallbeladung aufweist, bei der die Elemente Palladium und Rhodium in einem Gewichtsverhältnis von > 9:1 vorliegen,
- eine spezifische Edelmetallbeladung von Palladium und Rhodium von höchstens 40 g/ft³ bezogen auf das Katalysatorvolumen V_{K} aufweist.

Die erfindungsgemäßen Werte der Rohemissionen in den genannten Zeitintervallen erlauben es in Kombination mit der erfindungsgemäßen Edelmetallbeladung des Katalysators nach einem Kaltstart niedrige Endrohr - Emissionen (Tail-Pipe-Emissionen) kostengünstig zu erreichen.

Erfindungsgemäß ist vorgesehen, dass der Verbrennungsmotor mit Katalysatorsystem im Neuen Europäischen Fahrzyklus zumindest die Emissionsgrenzwerte der EU-Norm 4, vorzugsweise sogar der EU-Norm 5 erreicht. Die erfindungsgemäße Wahl des Gewichtsverhältnisses von Palladium zu Rhodium in Kombination in Kombination mit den relativ niedrigen Rohemissionen an Stickoxyden und Kohlenwasserstoffen erlaubt es, bei niedrigen Kosten und verringertem Einsatz an Rhodium die gesetzlich vorgeschriebene Endrohr - Emissionen zu erreichen.

Bei der erfindungsgemäßen Vorrichtung zur Erreichung der Emissionsgrenzwerte der EU-Norm 4, vorzugsweise der EU-Norm 5, in einem System beinhaltend einen Verbrennungsmotor und ein Abgassystem mit Katalysator, ist vorgesehen, dass der Verbrennungsmotor
- ein direkteinspritzender Verbrennungsmotor ist.
- einen Hubraum zwischen 0,89 l und 2 l aufweist,
- von einem einen Verdichter und eine Turbine umfassenden Abgasturbolader aufgeladen wird,
- eine kumulierte Rohemission aufweist, die innerhalb eines Zeitintervalls von 10 Sekunden an Kohlenwasserstoffen 0,05 g/km und an Stickoxiden 0,04 g/km nicht überschreiten, und
- bei einem Betrieb im Neuen Europäischen Fahrzyklus nach einem Motorstart
- eine Heizmaßnahme vorgesehen Ist, bei der in einem Homogenbetrieb eine Mehrfacheinspritzung von Kraftstoff erfolgt, die mindestens eine erste frühe Kraftstoffeinspritzung während eines Ansaugtaktes und mindestens eine zweite späte Einspritzung in einem Verdichtungstakt eines Zylinders umfasst, so dass innerhalb eines Zeitintervalls von 30 Sekunden der Katalysator eine Temperatur T_{K} von 300°C überschreitet und
wobei der Katalysator
- eine Edelmetallbeladung aufweist, bei der die Elemente Palladium und Rhodium in einem Gewichtsverhältnis von > 9:1 vorliegen,
- eine spezifische Edelmetallbeladung von Palladium und Rhodium von höchstens 40 g/ft³ bezogen auf das Katalysatorvolumen V_{K} aufweist.

Ferner wird die Aufgabe erfindungsgemäß gelöst durch ein Kraftfahrzeug, welche eine erfindungsgemäße Vorrichtung aufweist.

Erfindungsgemäß ist ferner vorgesehen, dass als untere Grenze für die spezifische Beladung des Katalysator mit Rhodium ein vorgegebener Wert gewählt wird, bei dem eine vorgegebener Grad an Homogenität der Verteilung von Rhodium nicht unterschritten wird, da andernfalls die mechanische oder thermische Stabilität der Katalysatorbeschichtung nicht gewährleistet Ist. Bevorzugt ist eine Beladung mit Rhodium von größer/gleich 1g/ft³ die in der Praxis eine ausreichende Homogenität erreichen lassen.

Erfindungsgemäß ist vorzugsweise ein fremdgezündeter und/oder ein direkteinspritzender Verbrennungsmotor vorgesehen mit dem die erfindungsgemäße Aufheizung des Katalysators nach einem Motorstart und/oder die erfindungsgemäßen Emissionsgrenzwerte erreicht werden können.

Vorteilhafte Ausführungsformen der Erfindung sind den abhängigen Ansprüchen zu entnehmen.

Wenn eine Temperatur T_{K} von 300°C innerhalb des restlichen Messintervalls des Neuen Europäischen Fahrzyklus nach einer Startphase von 30 Sekunden nicht oder nur für Teilintervalle von maximal 2 Sekunden, vorzugsweise 1 Sekunde unterschritten wird, ist gewährleistet, dass auch im transiententen Fahrbetrieb der Katalysator eine ausreichend hohe Betriebstemperatur aufweist um Emissionsspitzen zu vermeiden, die die Katalysatoralterung beschleunigen könnten.

In weiteren Ausführungsformen des Verfahrens ist vorgesehen, dass die Startphase 20 Sekunden oder 10 Sekunden beträgt.

Zweckmäßig ist es, wenn der Katalysator eine Beladung mit Rhodium B_{Rh} zwischen 0,221 g und 0,106 g, vorzugsweise bei einem Katalysator mit einem Volumen V_{K} von 1,0 I eine B_{Rh} von 0,177 g, 0,142 g oder 0,106 g oder vorzugsweise bei einem Katalysator mit Vₖ = 1,258 l, eine B_{Rh} von 0,221 g, 0,178 g oder 0,134 g aufweist.

Ferner ist es zweckmäßig wenn der Katalysator eine spezifische Edelmetallbeladung von Palladium und Rhodium von höchstens 100 g/ft³, 80 g/ft³, 60 g/ft³, 40 g/ft³ oder 20 g/ft³ bezogen auf das Katalysatorvolumen V_{K} aufweist, um die EU-Norm 4 oder sogar EU-Norm 5 sicher zu erreichen.

Der Katalysator hat bevorzugt ein Volumen V_{K} zwischen 0,9 und 1,4 l. Günstigerweise weist der Katalysator einen wabenförmigen Träger mit einer als Washcoat ausgebildeten Oberfläche auf und hat eine geometrische Oberfläche GSA zwischen 3,0 qm und 4,0 qm. Als geometrische Oberfläche GSA wird hier die Oberfläche des wabenförmigen Trägers ohne den Washcoat bezeichnet.

Vor allem für kleinere und drehmomentorientierte Verbrennungsmotoren sind Abgasturbolader Konzepte von Bedeutung, mit denen die Leistungsdichte bei gleichem Hubraum erhöht, eine Drehmomentsteigerung erreicht und ferner ein downsizing größerer Motoren verwirklicht werden kann. Es ist daher in einer weiteren Ausführungsform der Erfindung eine Aufladung des Verbrennungsmotors mit einem Abgasturbolader, der einen Verdichter und eine Turbine umfasst, vorgesehen, wobei der Abgasturbolader stromauf des Katalysatorsystems angeordnet ist. Obwohl ein derartiger Abgasturbolader zu einer Verminderung der Abgastemperatur, typischerweise zwischen 50°C und 150°C führt, erlaubt der erfindungsgemäße Verbrennungsmotor eine schnelle Aufheizung des Katalysatorsystems auf Betriebstemperatur.

Zur Verbesserung der Leistungseigenschaften des Verbrennungsmotors ist ferner vorgesehen, dass dieser zusätzlich mit einer stromauf des Verdichters des Abgasturboladers in einem Luftansaugkanal angeordneten Kompressor aufgeladen wird.

Zur Reduzierung der NOX-Rohemissionen bei gleichzeitiger Wirkungsgraderhöhung durch eine Entdrosselung des Verbrennungsmotors ist es insbesondere im Teillastbetrieb üblich, Verbrennungsmotoren mit einer äußeren Abgasrückführung zu betreiben um die gesetzlichen Abgasgrenzwerte für Nox nicht zu überschreiten. Erfindungsgemäß ist in einer bevorzugten Ausführungsform dagegen vorgesehen, dass der Verbrennungsmotor ohne äußere Abgasrückführung betrieben wird oder betreibbar ist, da die mit dem Motor erreichbaren Nox-Rohemissionen niedrig und die Abgasgrenzwerte auch ohne die äußere Abgasrückführung erreichbar sind - womit eine konstruktive Vereinfachung und entsprechende Kostenvorteile zu erreichen sind.

Bevorzugt wird das Verfahren bei einem Verbrennungsmotor mit einem Hubraum zwischen 0,9 I und 2 l, vorzugsweise 1,2 l oder 1,4 l eingesetzt. Der Verbrennungsmotor kann eine spezifische Leistung von 50 bis 80 kW/l und/oder ein spezifisches Moment von 120 bis 170 Nm/l zur Verfügung stellen.

Zur Gewährleistung eines schnellen Warmlaufs nach dem Motorstart wird eine Heizmaßnahme für den Katalysator eingeleitet, die eine Spätzündung mit einem Zündwinkel von mindestens 10°KW (Kurbelwinkel) nach einem oberen Zündtotpunkt (ZOT) und/oder eine Mehrfach-Einspritzung umfasst.

Ferner kann eine Kraftstoff - Späteinspritzung als Heizmaßnahme für den Katalysator eingesetzt werden, vorzugsweise mit einem Ende der Einspritzung mit einem Einspritzwinkel von 80°C bis 10°KW (Kurbelwinkel) vor ZOT.

In einer weiteren Ausführungsform der Erfindung umfasst die Heizmaßnahme eine Abgasnachverbrennung und/oder eine Kraftstoffnacheinspritzung.

Günstige Leistungsdaten bei gleichzeitig geringen Schadstoffemissionen lassen sich erreichen, wenn der Verbrennungsmotor einen betriebspunktbezogenen spezifischen Kraftstoffverbrauch von weniger als 580 g/KWh beziehungsweise weniger als 550 bis 510 g/KWh bei einer Drehzahl von 1200 min⁻¹ und einem effektiven Mitteldruck von 1 Bar und/oder 410 g/kWh, vorzugsweise 390 bis 375 g/KWh bei 2000 min⁻¹ und 2 bar effektiven Mitteldruck und/oder 300 g/kWh, vorzugsweise 290 - 280 g/kWh bei 3500 min⁻¹ und 6 bar effektiven Mitteldruck aufweist.

Weitere Aspekte und Vorteile der Erfindung sind auch unabhängig von der Zusammenfassung von Merkmalen in den Patentansprüchen der nachfolgenden Beschreibung nebst zugehörigen Zeichnungen zu entnehmen.

Es zeigen
- Figur 1: eine Ausführungsform eines erfindungsgemäßen Verbrennungsmotors
- Figur 2: den zeitlichen Verlauf der Katalysatortemperatur TK in einem Zeitintervall von 0 bis 100 sec.
- Figur 3: des zeitlichen Verlauf der Katalysatortemperatur TK in einem zeitlichen Intervall von 0 bis 1200 sec.
- Figur 4: die Tail-Pipe und Rohemissionen eines erfindungsgemäßen Verbrennungsmotors

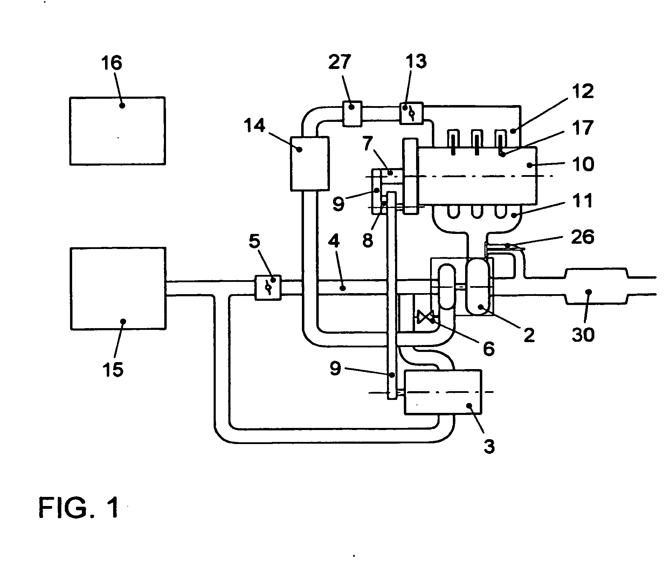

Der in Fig.1 schematisch dargestellte direkteinspritzende Verbrennungsmotor für einen Mittelklassefahrzeug ist als Otto-Motor mit einer Leistung von 100 kW bis 170 kW konzipiert und weist ein Volumen von 1,4 Liter auf. Es versteht sich, dass die Erfindung auch Verbrennungsmotoren mit anderen Leistungsdaten, sowie einer anderen Abgasturboaufladung oder ohne Abgasturboaufladung umfasst.

Der Verbrennungsmotor 10 umfasst ein Direkteinspritzsystem mit Injektoren 17 und einen Luftansaugpfad mit einem Saugrohr 12. Im Luftansaugpfad des Verbrennungsmotors 10 ist ferner ein Luftfilter 15, ein Kompressor 3, eine den Kompressor 3 überbrückende Bypassleitung 4 mit einer Drosselklappe 5, ein Verdichter eines Abgasturboladers 2, ein Ladeluftkühler 14, ein EGR-Ventil 27 einer ansonsten nicht dargestellten äußeren Abgasrückführung (EGR) und eine elektronische Drosselklappe 13 angeordnet. In einer weiteren Ausführungsform der Erfindung fehlen das EGR-System sowie das EGR-Venfil 27.

In einer weiteren Ausführungsform ist der Verbrennungsmotor schichtladefähig und weist beispielsweise eine sogenannte Tumbleklappe im Luftansaugkanal auf. Der Kraftstoff wird typischerweise im Schichtladebetrieb erst sehr spät während der Kompressionsphase eingespritzt. Er gelangt so direkt in die Luft im Brennraum, die durch die Position der Klappe im Einlasskanal einerseits und durch die besondere Form des Kolbenbodens andererseits in eine walzenförmige Ladungsbewegung (Tumble) versetzt wurde. Es versteht sich, dass die Erfindung auch bei anderen Schichtladungsverfahren eingesetzt werden kann.

Die Verdichterdrosselklappe 5 regelt die Verdichtung des Kompressors 3 und versorgt den Verdichter des Abgasturboladers 2 mit genügend Luft, wenn die Förderleistung des Kompressors 3 nicht mehr ausreichend ist oder der Kompressor 3 bei ausreichend hohen Drehzahlen abgeworfen wird. Das Schubumluftventil 6 dient dem Schutz des Abgasturboladers 2 vor Überdrehen im Schubbetrieb. Der Kompressor 3 wird über Riemen 9 von einer Kurbelwelle 7 der Brennkraftmaschine angetrieben. Dabei ist der Antrieb des Kompressors 3 mittels einer Kupplung 8, beispielsweise einer Magnetkupplung, von der Kurbelwelle 7 trennbar. Im unteren Drehzahlbereich bis 1700 U/min erfolgt eine doppelte Aufladung durch den Kompressor 3. Bei höheren Drehzahlen wird der Kompressor 3 abgeworfen und die Brennkraftmaschine wird mit einer einfachen Aufladung durch den Abgasturbolader 2 betrieben. Es wird damit ein fülliger Drehmomentverlauf der Brennkraftmaschine über einen breiten Drehzahlbereich realisiert.

Im Abgaspfad des Verbrennungsmotors ist ein Abgaskrümmer 11, die Turbine des Abgasturboladers 2, ein Wastegate 26 sowie ein erfindungsgemäßer Katalysator 30 angeordnet. In einer weiteren Ausführung der Erfindung können im Abgaspfad des Verbrennungsmotors 10 noch ein weiterer oder mehrere Katalysatoren angeordnet sein.

Zur Steuerung bzw. Regelung des Verbrennungsmotors 10 ist eine Motorsteuerung 16 vorgesehen, die wie üblich mit verschiedenen Sensoren sowie Stellmitteln verbunden ist. Eine Regelung des dem Verbrennungsmotor 10 zugeführten Luft-Kraftstoff-Verhältnisses erfolgt mit Hilfe einer Messung einer Sauerstoffkonzentration des Abgases mit einer nicht dargestellten Lambdasonde. Ferner kann ein ebenfalls nicht dargestellter Temperatursensor im Bereich des Katalysators 30 angeordnet sein, mit dem eine Messung einer Abgastemperatur nur . Bestimmung einer Katalysatortemperatur T_{K} erfolgen kann. Als Katalysatortemperatur T_{K} wird die Temperatur einer katalytischen Beschichtung des Katalysators ca. 10 mm stromabwärts einer Abgaseintrittsfläche des Katalysators definiert, wobei mindestens 50 % der Katalysatorsquerschnittsfläche in diesem Bereich die jeweilige Temperatur aufweisen.

Das Motorsteuergerät steuert bzw. regelt den Verbrennungsmotor 10 in Abhängigkeit von Signalen der erwähnten Sensoren sowie von verschiedenen Betriebsparametern des Verbrennungsmotors 10.

Der Katalysator 30 umfasst einen mit Washcoat beschichteten Träger und ist erfindungsgemäß mit einer Edelmetallbeladung mit zumindest den Elementen Palladium und Rodium ausgestattet, wobei in der Edelmetallbeladung die Elemente Palladium und Rodium in einem Gewichtsverhältnis von > 5:1, 6:1, 7:1, 8:1, 9:1, 10:1, 11:1, 12:1 oder 18:1 vorliegen. Der Washcoat ist eine poröse Metalloxidschicht, die auf dem Träger aufgebracht ist und beinhaltet beispielsweise Aluminiumoxid, oder Siliciumoxid, Ceriumdioxid, Titandioxid oder Zirkoniumoxid als Träger werden extruierte keramische Honeycombmonolithe mit wabenförmigen Zellen eingesetzt. Die Zelldichte liegt vorzugsweise in einem Bereich zwischen 500 und 800 cpsi, insbesondere 600 cpsi. Die Zellwände haben vorzugsweise eine Randstärke von 2,5 mil bis 4,5 mil, insbesondere 4,3 mil.

Die spezifische Edelmetallbeladung des Katalysators mit Palladium und Rodium bezogen auf das Katalysatorvolumen V_{K} beträgt höchstens 100 g/ft³, 80 g/ft³, 60 g/ft³ oder 20 g/ft³.

Vorzugsweise beträgt die geometrische Oberfläche GSA zwischen 3,0 qm und 4,0 qm, wobei als geometrische Oberfläche GSA die Oberfläche des wabenförmigen Trägers ohne den Washcoat bezeichnet wird.

Vorteilhaft ist es, wenn der Katalysator eine Beladung mit Rodium B_{Rh} zwischen 0,221 g und 0,106 g, vorzugsweise bei einem Katalysator mit einem Volumen V_{K} von 1,0 I eine B_{Rn} von 0,177 g, 0,142 g oder 0,106 g oder vorzugsweise bei einem Katalysator mit Vₖ = 1,258 **I,** eine B_{Rh} von 0,221 g, 0,178 g oder 0,134 g aufweist.

Die erfindungsgemäße spezifische Beladung des Katalysators ist so gewählt, dass eine ausreichend homogene Verteilung des Rhodiums gewährleistet ist. Ein bevorzugter Wert für die Rhodiumbeladung ist >= 1g/ft³.

Bevorzugt hat der Katalysator ein Volumen V_{K} zwischen 0,9 l und 1,4 l.

Erfindungsgemäß ist der Verbrennungsmotor 10 derart ausgelegt, das nach einem Motorstart bei einem Betrieb im Neuen Europäischen Fahrzyklus innerhalb eines Zeitintervalls von 30 sec. der Katalysator eine Temperatur T_{K} von 300°C überschreitet.

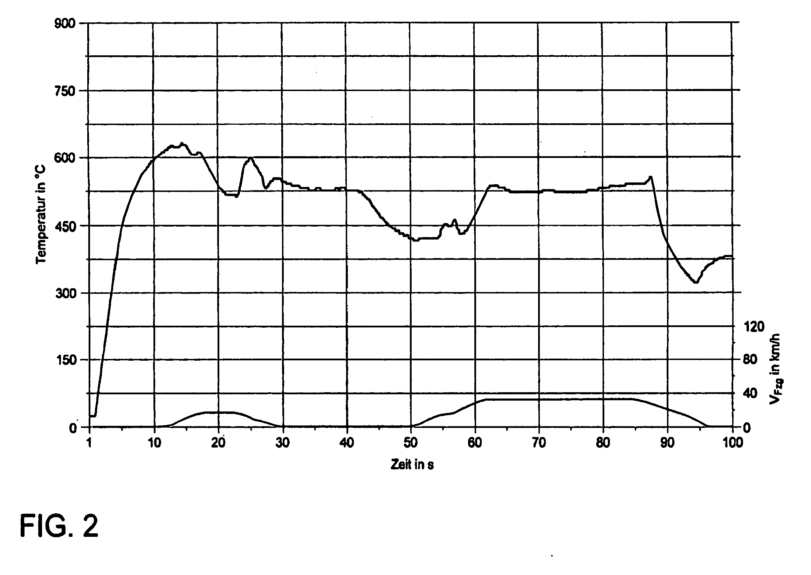

In Figur 2 ist ein zeitlicher Temperaturverlauf in einem Zeitintervall zwischen 0 und 100 sec. bei einem erfindungsgemäßen Verfahren dargestellt. Die Temperatur T_{K} zeigt einen starken Anstieg in den ersten 10 Sekunden auf einen Wert um 600°C herum und unterschreitet im weiteren Verlauf die Temperatur von 300°C nicht mehr.

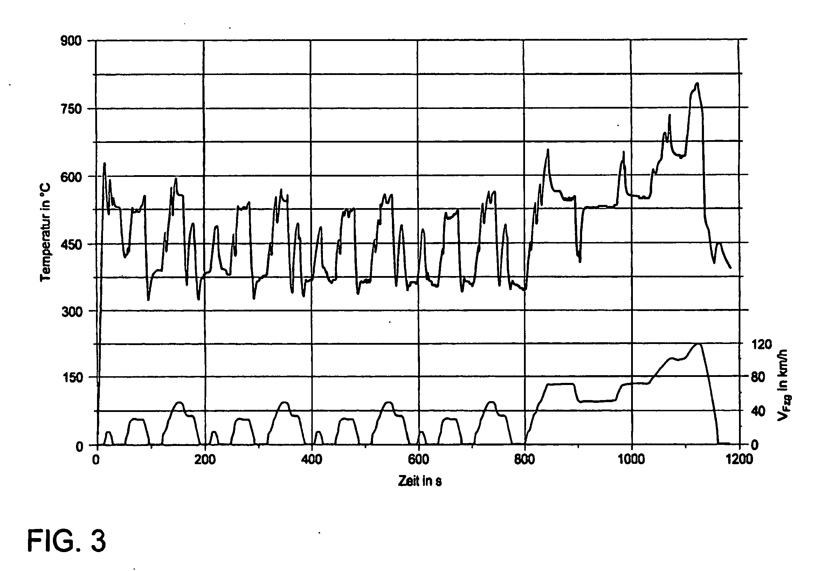

In Figur 3 ist für einen Motor mit 1,4l Hubraum und 88kW Leistung mit einem Abgasturbolader ohne zusätzlichen Kompressor und einem stromab des Abgasturboladers angeordneten Katalysatorsystem der zeitliche Verlauf der Katalysatortemperatur T_{K} in einem zeitlichen Intervall von 0 bis 1200 sec. dargestellt, wobei ersichtlich ist, das die Temperatur T_{K} bis zum Ende des Zeitintervalls 300°C nicht unterschreitet. Bei den Messungen gemäß den Figuren 2 und 3 wurde ein Fahrprofil entsprechend dem Neuen Europäischen Fahrzyklus verwendet wie aus dem zeitlichen Verlauf von V_{Fzg}. ersichtlich ist. Ausgangsbasis war jeweils ein Motorstart bei Standardbedingungen von +20° C Umgebungs- und Fahrzeugtemperatur bei einer relativen Luftfeuchtigkeit in einem Bereich zwischen 30% und 70%.

Erfindungsgemäß ist vorgesehen, dass nach einem Motorstart der Katalysator eine Temperatur T_{K} von 300°C, 450°C oder 550°C, innerhalb von 30 sec. vorzugsweise innerhalb eines Zeitintervalls von 20 sec., besonders bevorzugt innerhalb von 10 sec. nach einem Motorstart überschreitet.

Zur Erreichung einer schnellen Aufheizung des Katalysators ist erfindungsgemäß in einem Homogenbetrieb eine Spätzündung mit einem Zündwinkel von mindestens 10° nach ZOT vorgesehen. Ferner erfolgt optional eine Späteinspritzung von Kraftstoff vorzugsweise mit einem Ende der Einspritzung bei einem Einspritzwinkel in einem Bereich von 80° bis 10° vor ZOT in einem Homogen - oder einem Schichtladebetrieb.

Ferner kann als Heizmaßnahme in einem Homogen- oder Schichtladebetrieb eine Mehrfacheinspritzung von Kraftstoff erfolgen. Die Mehrfacheinspritzung umfasst mindestens eine erste, frühe Kraftstoffeinspritzung während eines Ansaugtaktes und mindestens eine zweite, späte Einspritzung in einem Verdichtungstakt eines Zylinders. Vorzugsweise erfolgt eine Mehrfacheinspritzung mit einem Einspritzende der späten Einspritzung von 40° vor ZOT und einem Zündwinkel von 30° nach ZOT. Ferner ist vorgesehen, dass ein Ende späten Einspritzung bei einem Einspritzwinkel von 80° bis 10° vor ZOT, insbesondere von 60° bis 25° vor ZOT erfolgt.

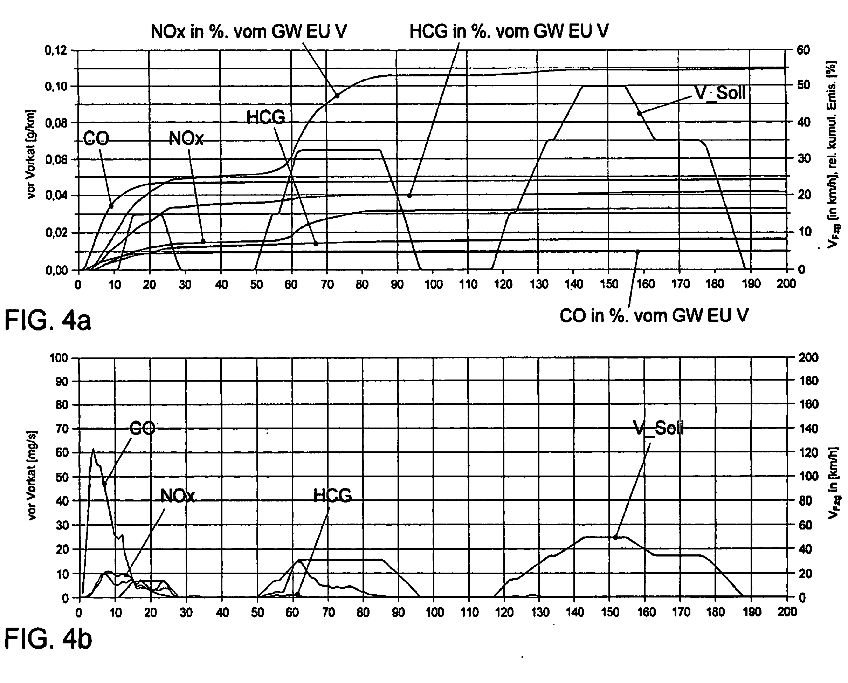

In Figur 4 sind die kumulierten Tail-Pipe und Rohemissionen für Kohlenmonoxid Co, Kohlenwasserstoffe HCG sowie Stickoxide NOx bei einem erfindungsgemäßen Verfahren für die ersten 200 Sekunden des neuen europäische Fahrzyklus dargestellt.

Aus der Figur 4 a ist ersichtlich, dass die kumulierte NOx Rohemission in den ersten 60 Sekunden weniger als 0,05 g/km die HCG Rohemissionen bei weniger als 0,075 g/km und die CO Rohemission bei weniger als 0,15 g/km liegen. Damit liegen die genannten Rohemissionen bei dem erfindungsgemäßen Verfahren in den ersten 60 Sekunden des neuen europäischen Fahrzyklus unterhalb der Grenzwerte der EU 4 Norm.

In Figur 4b sind die Tail-Pipe Emissionen, das heisst die Emissionen stromab des Katalysatorssystems bei einem erfindungsgemäßen Verfahren in den ersten 200 Sekunden des neuen europäischen Fahrzyklus dargestellt. Ersichtlich ist, dass die NOx-Emission im gesamten Zeitintervall geringer als 15 mg/Sekunde und die Kohlenwasserstoffemission geringer als 15 mg/Sekunde ist. Die Kohlenmonoxid CO-Emission ist im gesamten Zeitintervall geringer als 65 mg/Sekunde.

Die dargestellten Emissionen wurden dabei bei einem direkt einspritzenden Verbrennungsmotor mit 1,4 L Hubraum und 88 KW Leistung und einem Abgasturbolader ohne zusätzlichen Kompressor gemessen, der mittels erfindungsgemäßer Heizmaßnahmen nach einem Motorstart den Katalysator auf eine Temperatur TK von 300° C innerhalb von 10 Sekunden nach dem Motorstart bei Standartbedingungen aufgeheizt hat.

Mit dem erfindungsgemäßen Verfahren lassen sich Emissionen stromab des Katalysatorsystems (Tail-Pipe) erreichen, die im Neuen Europäischen Fahrzyklus zumindest die Grenzwerte der EU-Norm 4 oder sogar der EU-Norm 5 genügen.

## Patentansprüche

1. Verfahren zur Erreichung zumindest der Emissionsgrenzwerte der EU-Norm 4, vorzugsweise der EU-Norm 5, in einem System beinhaltend einen Verbrennungsmotor und ein Abgassystem mit Katalysator,
wobei der Verbrennungsmotor
- ein direkteinspritzender Verbrennungsmotor ist,
- einen Hubraum zwischen 0,89 l und 2 l aufweist,
- von einem einen Verdichter und eine Turbine umfassenden Abgasturbolader aufgeladen wird,
- eine kumulierte Rohemission aufweist, die innerhalb eines Zeitintervalls von 10 Sekunden an Kohlenwasserstoffen 0,05 g/km und an Stickoxiden 0,04 g/km nicht überschreiten, und
- bei einem Betrieb Im Neuen Europäischen Fahrzyklus nach einem Motorstart
- eine Heizmaßnahme vorgesehen ist, bei der in einem Homogenbetrieb eine Mehrfacheinspritzung von Kraftstoff erfolgt, die mindestens eine erste frühe Kraftstoffeinspritzung während eines Ansaugtaktes und mindestens eine zweite späte Einspritzung in einem Verdichtungstakt eines Zylinders umfasst, so dass innerhalb eines Zeitintervalls von 30 Sekunden der Katalysator eine Temperatur T_{K} von 300°C überschreitet und
wobei der Katalysator
- eine Edelmetallbeladung aufweist, bei der die Elemente Palladium und Rhodium in einem Gewichtsverhältnis von > 9:1 vorliegen,
- eine spezifische Edelmetallbeladung von Palladium und Rhodium von höchstens 40 g/ft³ bezogen auf das Katalysatorvolumen V_{K} aufweist.

2. Verfahren nach dem vorhergehenden Anspruch, **dadurch gekennzeichnet, dass** eine Temperatur T_{K} von 300° C innerhalb des restlichen Messintervalls des Neuen Europäischen Fahrzyklus nach einer Startphase von 30 Sekunden, vorzugsweise 20 Sekunden, besonders bevorzugt 10 Sekunden nicht oder nur für Teilintervalle von maximal 2 Sekunden unterschritten wird.

3. Verfahren nach einem der vorhergehenden Ansprüche, **dadurch gekennzeichnet, dass** der Katalysator ein Beladung mit Rhodium B_{Rh} zwischen 0,221 g und 0,106 g, vorzugsweise bei einem Katalysator mit einem Volumen V_{K} von 1,0 l eine B_{Rh} von 0,177 g, 0,142 g oder 0,106 g oder vorzugsweise bei einem Katalysator mit Vₖ = 1,258 l, eine B_{Rh} von 0,221 g, 0,178 g oder 0,134 g aufweist.

4. Verfahren nach zumindest einem der vorhergehenden Ansprüche, **dadurch gekennzeichnet, dass** der Katalysator ein Volumen V_{K} zwischen 0,9 l und 1,4 l aufweist.

5. Verfahren nach einem der vorhergehenden Ansprüche, **dadurch gekennzeichnet, dass** der Katalysator einen wabenförmigen Träger mit einer als Washcoat ausgebildeten Oberfläche mit einer geometrischen Oberfläche GSA zwischen 3,0 qm und 4,0 qm aufweist.

6. Verfahren nach einem der vorhergehenden Ansprüche, **dadurch gekennzeichnet, dass** der Verbrennungsmotor zusätzlich mit einer stromauf des Verdichters des Abgasturboladers in einem Luftansaugkanal angeordneten Kompressor aufgeladen wird oder ist.

7. Verfahren nach einem der vorhergehenden Ansprüche, **dadurch gekennzeichnet, dass** der Verbrennungsmotor ohne äußere Abgasrückführung betrieben wird oder betreibbar ist.

8. Verfahren nach einem der vorhergehenden Ansprüche, **dadurch gekennzeichnet, dass** der Verbrennungsmotor eine spezifische Leistung von 50 bis 80 KW/l und/oder ein spezifisches Moment von 120 bis 170 Nm/l zur Verfügung stellt oder zur Verfügung stellen kann.

9. Verfahren nach einem der vorhergehenden Ansprüche, **dadurch gekennzeichnet, dass** nach dem Motorstart eine Heizmaßnahme eingeleitet wird, die eine Spätzündung mit Zündwinkeln von mindestens 10° nach einem oberen Zündtotpunkt, eine Späteinspritzung und/oder eine Mehrfach-Einspritzung umfasst.

10. Verfahren nach einem der vorhergehenden Ansprüche, **dadurch gekennzeichnet, dass** die Heizmaßnahme eine Abgasnachverbrennung und/oder eine Kraftstoffnacheinspritzung umfasst.

11. Verfahren nach einem der vorhergehenden Ansprüche, **dadurch gekennzeichnet, dass** der Verbrennungsmotor einen betriebspunktbezogenen spezifischen Kraftstoffverbrauch von weniger als 580 g/kWh beziehungsweise weniger als 550 bis 510 g/kWh bei einer Drehzahl von 1200 min⁻¹ und einem effektiven Mitteldruck von 1 Bar und/oder 410 g/KWh, vorzugsweise 390 bis 375 g/KWh bei 2000 min⁻¹ und 2 bar effektiven Mitteldruck und/oder 300 g/KWh, vorzugsweise 290 - 280 g/KWh bei 3500 min⁻¹ und 6 bar effektiven Mitteldruck aufweist.

12. Vorrichtung zur Erreichung zumindest der Emissionsgrenzwerte der EU-Norm 4, vorzugsweise der EU-Norm 5, in einem System beinhaltend einen Verbrennungsmotor und ein Abgassystem mit Katalysator,
wobei der Verbrennungsmotor
- ein direkteinspritzender Verbrennungsmotor ist,
- einen Hubraum zwischen 0,89 l und 2 l aufweist,
- von einem einen Verdichter und eine Turbine umfassenden Abgasturbolader aufgeladen wird,
- eine kumulierte Rohemission aufweist, die innerhalb eines Zeitintervalls von 10 Sekunden an Kohlenwasserstoffen 0,05 g/km und an Stickoxiden 0,04 g/km nicht überschreiten, und
- bei einem Betrieb Im Neuen Europäischen Fahrzyklus nach einem Motorstart
- eine Heizmaßnahme vorgesehen ist, bei der in einem Homogenbetrieb eine Mehrfacheinspritzung von Kraftstoff erfolgt, die mindestens eine erste frühe Kraftstoffeinspritzung während eines Ansaugtaktes und mindestens eine zweite späte Einspritzung in einem Verdichtungstakt eines Zylinders umfasst, so dass innerhalb eines Zeitintervalls von 30 Sekunden der Katalysator eine Temperatur T_{K} von 300°C überschreitet und
wobei der Katalysator
- eine Edelmetallbeladung aufweist, bei der die Elemente Palladium und Rhodium in einem Gewichtsverhältnis von > 9:1 vorliegen,
- eine spezifische Edelmetallbeladung von Palladium und Rhodium von höchstens 40 g/ft³ bezogen auf das Katalysatorvolumen V_{K} aufweist.

13. Kraftfahrzeug, welches eine Vorrichtung nach Anspruch 12 aufweist.

## Claims

1. Method for attaining at least the emissions limit values of the EU 4 standard, preferably of the EU 5 standard, in a system comprising an internal combustion engine and an exhaust system with catalytic converter,
the internal combustion engine
- being a direct-injection internal combustion engine,
- having a swept volume of between 0.89 1 and 2 1,
- being charged by an exhaust-gas turbocharger which comprises a compressor and a turbine,
- having cumulative untreated emissions which, within a time interval of 10 seconds, do not exceed 0.05 g/km hydrocarbons and 0.04 g/km nitrogen oxides, and,
- during operation in the New European Driving Cycle after an engine start,
- a heating measure being provided in which, in a homogeneous operating mode, a multiple injection of fuel takes place which comprises at least one first early fuel injection during an intake stroke and at least one second late injection in a compression stroke of a cylinder, such that the catalytic converter exceeds a temperature T_{K} of 300°C within a time interval of 30 seconds, and
the catalytic converter
- having a noble metal loading in which the elements palladium and rhodium are present in a weight ratio of > 9:1,
- having a specific noble metal loading of palladium and rhodium of at most 40 g/ft³ in relation to the catalytic converter volume V_{K}.

2. Method according to the preceding claim, **characterized in that** a temperature T_{K} of 300°C is not undershot, or is undershot only for partial intervals of at most 2 seconds, within the remaining measurement interval of the New European Driving Cycle after a start phase of 30 seconds, preferably of 20 seconds, particularly preferably of 10 seconds.

3. Method according to one of the preceding claims, **characterized in that** the catalytic converter has a rhodium loading B_{Rh} of between 0.221 g and 0.106 g, preferably a B_{Rh} value of 0.177 g, 0.142 g or 0.106 g in the case of a catalytic converter with a volume V_{K} of 1.0 l, or preferably a B_{Rh} value of 0.221 g, 0.178 g or 0.134 g in the case of a catalytic converter with Vₖ = 1.258 l.

4. Method according to at least one of the preceding claims, **characterized in that** the catalytic converter has a volume V_{K} of between 0.9 l and 1.4 l.

5. Method according to one of the preceding claims, **characterized in that** the catalytic converter has a honeycomb-like substrate with a surface which is formed as a washcoat and which has a geometric surface area GSA of between 3.0 m² and 4.0 m².

6. Method according to one of the preceding claims, **characterized in that** the internal combustion engine is additionally charged by means of a supercharger arranged upstream of the compressor of the exhaust-gas turbocharger in an air intake duct.

7. Method according to one of the preceding claims, **characterized in that** the internal combustion engine is or can be operated without external exhaust-gas recirculation.

8. Method according to one of the preceding claims, **characterized in that** the internal combustion engine provides or can provide a specific power of 50 to 80 kW/l and/or a specific torque of 120 to 170 Nm/l.

9. Method according to one of the preceding claims, **characterized in that**, after the starting of the engine, a heating measure is initiated which comprises a late ignition with ignition angles of at least 10° after an ignition top dead centre, a late injection and/or a multiple injection.

10. Method according to one of the preceding claims, **characterized in that** the heating measure comprises a post-combustion of exhaust gas and/or a post-injection of fuel.

11. Method according to one of the preceding claims, **characterized in that** the internal combustion engine has an operating-point-related specific fuel consumption of less than 580 g/kWh or less than 550 to 510 g/kWh at a rotational speed of 1200 rpm and a mean effective pressure of 1 bar, and/or 410 g/kWh, preferably 390 to 375 g/kWh at 2000 rpm and 2 bar mean effective pressure, and/or 300 g/kWh, preferably 290 - 280 g/kWh at 3500 rpm and 6 bar mean effective pressure.

12. Device for attaining at least the emissions limit values of the EU 4 standard, preferably of the EU 5 standard, in a system comprising an internal combustion engine and an exhaust system with catalytic converter,
the internal combustion engine
- being a direct-injection internal combustion engine,
- having a swept volume of between 0.89 l and 2 l,
- being charged by an exhaust-gas turbocharger which comprises a compressor and a turbine,
- having cumulative untreated emissions which, within a time interval of 10 seconds, do not exceed 0.05 g/km hydrocarbons and 0.04 g/km nitrogen oxides, and,
- during operation in the New European Driving Cycle after an engine start,
- a heating measure being provided in which, in a homogeneous operating mode, a multiple injection of fuel takes place which comprises at least one first early fuel injection during an intake stroke and at least one second late injection in a compression stroke of a cylinder, such that the catalytic converter exceeds a temperature T_{K} of 300°C within a time interval of 30 seconds, and
the catalytic converter
- having a noble metal loading in which the elements palladium and rhodium are present in a weight ratio of > 9:1,
- having a specific noble metal loading of palladium and rhodium of at most 40 g/ft³ in relation to the catalytic converter volume V_{K}.

13. Motor vehicle which has a device according to Claim 12.

## Revendications

1. Procédé pour atteindre au moins les valeurs limites d'émission de la norme UE 4, de préférence de la norme UE 5, dans un système comprenant un moteur à combustion interne et un système de gaz d'échappement avec catalyseur,
dans lequel le moteur à combustion interne
- est un moteur à combustion interne à injection directe,
- présente une cylindrée comprise entre 0,89 l et 2 l,
- est chargé par un turbocompresseur des gaz d'échappement qui présente un compresseur et une turbine,
- présente une émission brute cumulée qui, dans un intervalle de temps de 10 secondes, ne dépasse pas 0,05 g/km d'hydrocarbures et 0,04 g/km d'oxydes d'azote, et
- lors d'un fonctionnement dans le nouveau cycle de conduite européen, après un démarrage du moteur,
- il est prévu une action de chauffage au cours de laquelle, dans un mode de fonctionnement homogène, a lieu une injection multiple de carburant qui comprend au moins une première injection de carburant précoce pendant un cycle d'admission et au moins une deuxième injection de carburant tardive pendant un cycle de compression d'un cylindre, de sorte que le catalyseur dépasse une température T_{K} de 300 °C pendant un intervalle de temps de 30 secondes et
dans lequel le catalyseur
- présente une charge en métal noble où les éléments palladium et rhodium sont présents dans un rapport massique > 9:1,
- présente une charge en métal noble spécifique de palladium et de rhodium maximale de 40 g/ft³ en rapport avec le volume du catalyseur V_{K}.

2. Procédé selon la revendication précédente, **caractérisé en ce qu'**une température T_{K} de 300°C n'est pas franchie vers le bas, ou seulement pendant un intervalle de temps maximum de 2 secondes, pendant l'intervalle de mesure restant du nouveau cycle de conduite européen après une phase de démarrage de 30 secondes, de préférence de 20 secondes, plus préférablement de 10 secondes.

3. Procédé selon l'une des revendications précédentes, **caractérisé en ce que** le catalyseur présente une charge de rhodium B_{Rh} entre 0,221 g et 0,106 g, de préférence sur un catalyseur ayant un volume V_{K} de 1,0 l, une B_{Rh} de 0,177 g, 0,142 g ou 0,106 g ou de préférence sur un catalyseur avec V_{K} = 1,258 l, une B_{Rh} de 0,221 g, 0,178 g ou 0,134 g.

4. Procédé selon au moins l'une des revendications précédentes, **caractérisé en ce que** le catalyseur présente un volume V_{K} entre 0,9 l et 1,4 l.

5. Procédé selon l'une des revendications précédentes, **caractérisé en ce que** le catalyseur présente un support de forme alvéolaire avec une surface réalisée sous la forme d'une zone d'imprégnation avec une aire superficielle géométrique comprise entre 0,3 m² et 4,0 m².

6. Procédé selon l'une des revendications précédentes, **caractérisé en ce que** le moteur à combustion interne sera ou est en plus chargé par un compresseur disposé dans un conduit d'aspiration d'air en amont du compresseur du turbocompresseur des gaz d'échappement.

7. Procédé selon l'une des revendications précédentes, **caractérisé en ce que** le moteur à combustion interne fonctionne ou peut fonctionner sans retour externe des gaz d'échappement.

8. Procédé selon l'une des revendications précédentes, **caractérisé en ce que** le moteur à combustion interne fournit ou peut fournir une puissance spécifique de 50 à 80 kW/l et/ou un moment spécifique de 120 à 170 Nm/l.

9. Procédé selon l'une des revendications précédentes, **caractérisé en ce qu'**une action de chauffage est initiée après le démarrage du moteur, laquelle inclut un allumage tardif avec des angles d'allumage d'au moins 10° après un point mort d'allumage haut, une injection tardive et/ou une injection multiple.

10. Procédé selon l'une des revendications précédentes, **caractérisé en ce que** l'action de chauffage comprend une postcombustion des gaz d'échappement et/ou une post-injection de carburant.

11. Procédé selon l'une des revendications précédentes, **caractérisé en ce que** le moteur à combustion interne présente une consommation de carburant spécifique rapportée au point de fonctionnement inférieure à 580 g/kWh ou inférieure à 550 à 510 g/kWh à une vitesse de rotation de 1200 t/min et une pression moyenne effective de 1 bar et/ou de 410 g/kWh, de préférence de 390 à 375 g/kWh à 2000 t/min et une pression moyenne effective de 2 bar et/ou de 300 g/kWh, de préférence de 290 à 280 g/kWh à 3500 t/min et une pression moyenne effective de 6 bar.

12. Dispositif pour atteindre au moins les valeurs limites d'émission de la norme UE 4, de préférence de la norme UE 5, dans un système comprenant un moteur à combustion interne et un système de gaz d'échappement avec catalyseur,
dans lequel le moteur à combustion interne
- est un moteur à combustion interne à injection directe,
- présente une cylindrée comprise entre 0,89 1 et 2 1,
- est chargé par un turbocompresseur des gaz d'échappement qui présente un compresseur et une turbine,
- présente une émission brute cumulée qui, dans un intervalle de temps de 10 secondes, ne dépasse pas 0,05 g/km d'hydrocarbures et 0,04 g/km d'oxydes d'azote, et
- lors d'un fonctionnement dans le nouveau cycle de conduite européen, après un démarrage du moteur,
- il est prévu une action de chauffage au cours de laquelle, dans un mode de fonctionnement homogène, a lieu une injection multiple de carburant qui comprend au moins une première injection de carburant précoce pendant un cycle d'admission et au moins une deuxième injection de carburant tardive pendant un cycle de compression d'un cylindre, de sorte que le catalyseur dépasse une température T_{K} de 300°C pendant un intervalle de temps de 30 secondes et
dans lequel le catalyseur
- présente une charge en métal noble où les éléments palladium et rhodium sont présents dans un rapport massique > 9:1,
- présente une charge en métal noble spécifique de palladium et de rhodium maximale de 40 g/ft³ en rapport avec le volume du catalyseur V_{K}.

13. Véhicule automobile qui présente un dispositif selon la revendication 12.
